# EUROPÄISCHE PATENTANMELDUNG

(11) **EP 0 530 769 A1**
(43) Veröffentlichungstag der Anmeldung: **10.03.1993**
(21) Anmeldenummer: 92114983.7
(22) Anmeldetag: 02.09.1992
(51) Int. Cl.: D04H 5/06, D04H 3/16, D04H 13/00

(54) **Schmelzfaserverklebter Schichtstoff, Verfahren und Zwischenprodukt zu dessen Herstellung und dessen Verwendung**

(30) Priorität: 03.09.1991 DE 4129188
(71) Anmelder: Hoechst Trevira GmbH & Co KG, D-65929 Frankfurt am Main (DE)
(72) Erfinder: Mehdorn, Frank, Dr., W-1000 Berlin 37 (DE)

(57) **Zusammenfassung**

Beschrieben wird ein Schichtstoff enthaltend mindestens einen schmelzbinderverfestigten Vliesstoff auf Basis von Trägerfasern und Bindefasern und ein damit verbundenenes Flächengebilde, welches vermittels einer Klebschicht mit dem Vliesstoff verbunden ist. Der Schichtstoff ist dadurch gekennzeichnet, daß besagte Klebschicht durch praktisch vollständiges Aufschmelzen von Bindefasern erhältlich ist, welche sich in Form einer Schicht zumindest auf der Oberfläche des Vliesstoffes, die dem Flächengebilde zugewandt ist, befinden. Der erfindungsgemäße Schichtstoff läßt sich zur Herstellung von bituminerten Dach- und Dichtungsbahnen verwenden.

Ebenfalls beschrieben werden schmelzbinderverfestigte Vliesstoffe auf der Basis von Trägerfasern und Bindefasern, wobei diese Vliesstoffe einander abwechselnde Schichten aufweisen, in denen hauptsächlich besagte Trägerfasern oder hauptsächlich besagte Bindefasern auftreten. Diese Vliesstoffe sind dadurch gekennzeichnet, daß sie mindestens drei dieser Schichten aufweisen und daß zumindest eine Oberfläche des Vliesstoffes durch eine hauptsächlich Bindefasern enthaltende Schicht gebildet wird, die teilweise aufgeschmolzen ist. Ferner wird ein Verfahren zur Herstellung des erfindungsgemäßen Schichtstoffes beschrieben, das die folgenden Schritte umfaßt:
i) Herstellung eines Spinnvlieses durch Ausspinnen von geschmolzenem Polymermaterial aus parallel zueinander angeordneten Reihen von Spinndüsen unter Ausbildung von Trägerfasern und Bindefasern, wobei zumindest die erste und/oder die letzte Reihe der Spinndüsen mit zur Herstellung von Bindefasern geeignetem Polymermaterial beschickt wird,
ii) Verstrecken und Ablegen der so erhaltenen Polymerströme in an sich bekannter Weise auf einem Transportband, so daß sich zumindest auf der Oberseite oder auf der Unterseite des entstehenden Primärvlieses eine hauptsächlich aus Bindefasern bestehende Schicht ausbildet,
iii) mechanische Stabilisierung des sich auf dem Transportband befindlichen Primärvlieses durch Anwendung von Druck und/oder von erhöhter Temperatur auf besagtes Primärvlies, so daß dieses in der folgenden Stufe ohne Beschädigung gehandhabt werden kann,
iv) Zwischenverfestigung des stabilisierten Primärvlieses durch Kalandrieren und Aufschmelzen eines Teils der Bindefasern,
v) Zuführen eines Flächengebildes, so daß besagtes Flächengebilde mit besagtem zwischenverfestigtem Spinnvlies so kombiniert wird, daß die hauptsächlich aus Bindefasern gebildete Oberfläche des Spinnvlieses mit dem Flächengebilde in Berührung kommt, und
vi) Ausüben von erhöhter Temperatur und gegebenenfalls erhöhtem Druck, so daß die Bindefasern zumindest an der Berührungsfläche zwischen Spinnvlies und Flächengebilde praktisch vollständig aufschmelzen, sich eine Klebschicht zwischen beiden Flächengebilden ausbildet und der Schichtstoff seine Endverfestigung erfährt.

## Beschreibung

Die vorliegende Erfindung betrifft einen neuen Schichtstoff enthaltend einen speziellen Vliesstoff und eine Verstärkungsschicht, ein angepaßtes Verfahren und ausgewählte Zwischenprodukte zu dessen Herstellung, sowie die Verwendung des Schichtstoffes zur Herstellung von Dach- und Dichtungsbahnen.

Vliesstoffe, insbesondere Spinnvliese werden bereits seit langem als Trägermaterialien für Dach- und Dichtungsbahnen eingesetzt. Bei Herstellung und Gebrauch solcher Bahnen hat sich allerdings herausgestellt, daß der Widerstand gegen thermische Belastung bei der Bituminierung und die mechanischen Eigenschaften häufig zu wünschen übrig lassen. Es hat daher nicht an Versuchen gefehlt, diese Nachteile von Vliesstoffen zu verbessern.

So ist es bereits bekannt, Vliesstoffe auf der Basis von Synthesefasern mit Verstärkungsfasern, beispielsweise mit Glasfasern zu kombinieren. Beispiele für solche Dichtungsbahnen findet man in den GB-A-1,517,595, DE-Gbm-77-39,489, EP-A-160,609, EP-A-176,847 und EP-A-403,403. Die Verbindung zwischen Faservlies und Verstärkungsfasern erfolgt nach diesem Stand der Technik entweder durch Verkleben mittels eines Bindemittel oder durch Vernadeln der Schichten aus unterschiedlichem Material.

Aus der DE-A-3,417,517 sind ein textiler Einlagestoff mit anisotropen Eigenschaften und ein Verfahren zu dessen Herstellung bekannt. Der Einlagestoff besteht aus einem Substrat, das eine unter 150 °C schmelzende Oberfläche besitzt, und damit verbundenen über 180 °C schmelzenden Verstärkungsfilamenten, die auf dieser Oberfläche parallel zueinander verlaufend fixiert sind. Gemäß einer Ausführungsform kann es sich bei dem Substrat um einen Vliesstoff handeln, auf dessen einer Oberfläche sich Schmelzklebefasern oder -fäden befinden, die zur Herstellung einer Verklebung der parallel angeordneten Verstärkungsfasern mit dem Vliesstoff vorgesehen sind.

Auch aus der DE-A-3,941,189 ist eine Kombination von Verstärkungsfasern in Form einer Fadenkette mit Vliesstoffen auf der Basis von Synthesefasern bekannt, die auf verschiedenste Arten miteinander verbunden werden können, so auch durch die Verwendung von Klebefasern. Die beschriebenen Verbunde zeigen, wie auch die aus der DE-A-3,417,517 bekannten Einlagestoffe, anisotrope Eigenschaften auf.

Es besteht immer noch ein Bedürfnis nach verstärkten Schichtstoffen, die sich durch erhöhte, möglichst isotrope Festigkeit auszeichnen und die sich insbesondere als Trägermaterialien zur Herstellung von bituminierten Dach- oder Dichtungsbahnen eignen, die einen verbesserten Widerstand gegen thermische Belastung bei der Bituminierung aufweisen, sich durch eine gute Flammfestigkeit auszeichnen, möglichst isotrope mechanische Eigenschaften, wie z.B. Zugfestigkeiten aufweisen, und deren gewichtsbezogene Zugfestigkeit deutlich über den Werten entsprechender herkömmlicher Trägermaterialien liegt.

Ferner hat sich bei der praktischen Ausführung der Verbindung von Vliesstoffen mit textilen Flächengebilden gezeigt, daß beim Nadeln der Schichten im allgemeinen eine Schädigung der Einzelfasern erfolgt, so daß der Verbund keine optimale Festigkeit aufweist. Auch beim Verkleben von Vliesstoffen mit Flächengebilden, beispielsweise durch Kalandrieren des noch nicht verfestigten Verbundes, können Probleme auftreten. So hat sich herausgestellt, daß die einzelnen Schichten durch den beim Kalandierten ausgeübten Druck geschädigt werden können, so daß auch diese Verbunde keine optimale Festigkeit aufweisen.

Es bestand daher noch die Aufgabe, Schichtstoffe mit erhöhter isotroper Festigkeit zu entwickeln, welche die oben beschriebenen Nachteile nicht mehr aufweisen und die insbesondere als Trägermaterialien zur Herstellung von Dach- oder Dichtungsbahnen mit den gewünschten Vorteilen geeignet sind.

Gelöst wird diese Aufgabe durch Schichtstoffe nach Anspruch 1.

Bevorzugte Ausführungsformen der erfindungsgemäßen Schichtstoffe sind in den Unteransprüchen 2 bis 11 beschrieben.

Bei dem schmelzbinderverfestigten Vliesstoff, aus dem der erfindungsgemäße Schichtstoff aufgebaut ist, kann es sich praktisch um jeden Vliesstoff handeln, solange dieser Träger- und Bindefasern enthält und sich zumindest auf einer Oberfläche dieses Vliesstoffes eine Schicht befindet, die hauptsächlich aus Bindefasern aufgebaut ist, so daß dort eine Verklebung mit der Verstärkungsschicht durchgeführt werden kann.

Bei dem Vliesstoff kann es sich um Vliese aus Stapelfasern handeln, beispielsweise um Kardenvliese, oder um nach anderen Vliesbildungstechniken hergestellte Vliesstoffe beispielsweise durch Naßvliestechnik oder durch aerodynamische oder hydrodynamische Vliesbildung. Besonders bevorzugt setzt man Spinnvliese ein.

Der Vliesstoff enthält Trägerfasem und Bindefasern. Der Anteil der beiden Fasertypen zueinander kann in weiten Grenzen gewählt werden, wobei darauf zu achten ist, daß der Anteil der Bindefasern so hoch gewählt wird, daß der Vliesstoff durch Verklebung der Trägerfasern mit den Bindefasern eine für die gewünschte Anwendung ausreichende Festigkeit erhält und daß der Anteil der Bindefasern auf zumindest einer Oberfläche so gewählt wird, so daß eine für die gewünschte Anwendung ausreichende Verbindung mit dem Flächengebilde aus Verstärkungsmaterial hergestellt werden kann.

Der Anteil des aus der Bindefaser stammenden Bindemittels im Vliesstoff beträgt üblicherweise weniger als 50 Gew.-%, bezogen auf das Gewicht des Vliesstoffes.

Die Träger- und Bindefasern können sich von beliebigen thermoplastischen fadenbildenden Polymeren ableiten. Trägerfasern können sich darüber hinaus auch von nicht schmelzenden fadenbildenden Polymeren ableiten. Beispiele für Polymere, von denen sich die Trägerfasern ableiten können, sind Polyacrylnitril, Polyolefine, wie Polyethylen, im wesentlichen aliphatische Polyamide, wie Nylon 6.6, im wesentlichen aromatische Polyamide (Aramide), wie Poly-(p-phenylenterephthalat) oder Copolymere enthaltend einen Anteil an aromatischen m-Diamineinheiten zur Verbesserung der Löslichkeit oder Poly-(m-phenylenisophthalat), im wesentlichen aromatische Polyester, wie Poly-(p-hydroxybenzoat) oder vorzugsweise im wesentlichen aliphatische Polyester, wie Polyethylenterepthalat.

Die Bindefasern werden im allgemeinen so ausgewählt, daß diese bei dem jeweils vorgegebenen Typ von Trägerfasern aufschmelzbar sind, ohne daß dabei wesentliche Anteil der Trägerfasern mit aufschmelzen und/oder sich thermoplastisch verformen. In der Regel liegt der Schmelzpunkt der Bindefasern mehr als 10 °C unterhalb des Schmelzpunktes der Trägerfasern.

Beispiele für Polymere, von denen sich die Bindefasern ableiten können, sind Polyolefine, wie Polyethylen, im wesentlichen aliphatische Polyamide, wie Nylon 6.6, oder vorzugsweise im wesentlichen aliphatische Polyester, wie Polyethylenterepthalat, insbesondere modifiziertes Polyethylenterephthalat oder Polybutylenterephthalat.

Die Einzelfasertiter der Träger- und der Bindefasern können innerhalb weiter Grenzen gewählt werden. Beispiele für übliche Titerbereiche sind 1 bis 16 dtex., vorzugsweise 2 bis 6 dtex.

Das Flächengewicht des Vliesstoffes bewegt sich üblicherweise im Bereich von etwa 20 bis 400 g/m², vorzugsweise 100 bis 200 g/m².

Das Flächengewicht des Schichtstoffes beträgt üblicherweise 100 bis 450 g/m², insbesondere 120 bis 250 g/m².

Die die Vliesstoffe aufbauenden Filamente oder Stapelfasern können einen praktisch runden Querschnitt besitzen oder auch andere Formen aufweisen, wie hantel-, nierenförmige, dreieckige bzw. tri- oder multilobale Querschnitte. Es sind auch Hohlfasern einsetzbar.

Ferner läßt sich die Bindefaser in Form von Bi- oder Mehrkomponentenfasern einsetzen, wobei die Bindekomponente mindestens einen Teil der Faseroberfläche ausfüllt.

Besonders bevorzugt setzt man Vliesstoffe auf Basis von Polyesterfasern ein; dabei handelt es sich insbesondere um Spinnvliese.

Das Flächengewicht solcher Polyester-Spinnvliese liegt vorzugsweise zwischen 20 und 400 g/m² und der Einzeltiter der Filamente zwischen 1 bis 16 dtex. Die Trägerfasern bestehen vorzugsweise aus Polyethylenterephthalat. Insbesondere können zumindest die Trägerfilamente aus flammhemmend modifizierten Polyestern bestehen, wie sie z.B. die DE-PS 2,346,787, die DE-PS 2,526,749 oder die EP-A-432,620 beschreiben.

Die Bindefilamente dieser bevorzugt verwendeten Spinnvliese bestehen vorzugsweise aus modifizierten Polyethylenterephthalat mit entsprechend abgesenktem Schmelzpunkt, z.B. aus isophthalsäure-modifizierten Polyethylenterephthalat oder aus Polybutylenterephthalat.

Die das Spinnvlies bildenden Filamente können durch übliche Zusätze modifiziert sein, beispielsweise durch Antistatika, wie Ruß.

Besonders bevorzugte Vliesstoffe zur Herstellung des erfindungsgemäßen Schichtstoffes sind schmelzbinderverfestigte Spinnvliese aus tragenden Filamenten und aus als Schmelzbinder dienenden Binderfilamenten, die aus Polyester bestehen, die mindestens eine oberflächige Klebeschicht gemäß der obigen Definition aufweisen, und deren Flächengewicht im Bereich zwischen 20 und 120 g/m², insbesondere zwischen 30 und 90 g/m² liegt, deren tragende Filamente und Binderfilamente Einzeltiter zwischen 1 und 7 dtex, insbesondere zwischen 1 und 4 dtex aufweisen und deren Binderfilamente einen Anteil von weniger als 50 Gew.% am Spinnvlies ausmachen.

Besonders bevorzugte Vliesstoffe zur Herstellung des erfindungsgemäßen Schichtstoffes sind schmelzbinderverfestigte Spinnvliese des vonanstehend beschriebenen Typs, bei denen die tragenden Filamente und die Binderfilamente aus flammhemmend modifiziertem Polyestern bestehen.

Vliesstoffe dieses Typs sind an sich aus der EP-A-414,141 bekannt.

Weitere besonders bevorzugte Vliesstoffe zur Herstellung des erfindungsgemäßen Schichtstoffes sind schmelzbinderverfestigte Spinnvliese aus tragenden Filamenten und aus als Schmelzbinder dienenden Binderfilamenten, die mindestens eine oberflächige Klebeschicht gemäß der obigen Definition aufweisen, und die Binderfilamente aufweisen, deren Schmelzpunkt weniger als 30 °C, vorzugsweise zwischen 10 und 20 °C unter dem Schmelzpunkt der tragenden Filamente liegt, wobei die tragenden Filamente und die Binderfilamente vorzugsweise Polyesterfasern sind.

Weitere besonders bevorzugte Vliesstoffe zur Herstellung des erfindungsgemäßen Schichtstoffes sind schmelzbinderverfestigte Spinnvliese aus tragenden Filamenten und aus als Schmelzbinder dienenden Binderfilamenten, die mindestens eine oberflächige Klebeschicht gemäß der obigen Definition aufweisen, und die Binderfilamente aufweisen, die aus Polyester bestehen, wobei diese Binderfilamente aus einem flammhemmend modifizierten Polyester, insbesondere aus Polyetheylterephthalat bestehen, welches flammhemmende Eigenschaften aufweist. Vorzugsweise bestehen die Binderfilamente aus Polyestern, in die phosphorhaltige Kettenglieder einkondensiert sind.

Vliesstoffe dieses Typs sind an sich aus der EP-A-432,620 bekannt.

Weitere besonders bevorzugte Vliesstoffe zur Herstellung des erfindungsgemäßen Schichtstoffes sind schmelzbinderverfestigte Spinnvliese auf Polyesterbasis aus tragenden Filamenten und aus als Schmelzbinder dienenden Binderfilamenten, die mindestens eine oberflächige Klebeschicht gemäß der obigen Definition aufweisen, und die Binderfilamente aufweisen, die aus Polybutylenterphthalat bestehen.

Vliesstoffe dieses Typs sind an sich aus der DE-A-3,419,675 bekannt.

Das mit dem Vliesstoff zu kombinierende Flächengebilde kann durch praktisch jede Technik erzeugt werden, mit deren Hilfe flächenförmige Gebilde erzeugt werden können. Unter dem Begriff "Flächengebilde" ist im Rahmen dieser Beschreibung ein flächenförmiges Gebilde zu verstehen, das selbsttragend ist und als solches gehandhabt werden kann (im Gegensatz zu Fadenketten). Das Flächengebilde kann durch den damit zu kombinierenden Vliesstoff verstärkt werden; bevorzugt dient es jedoch als Verstärkungsschicht für den Vliesstoff. Beispiele für geeignete Flächengebilde sind Folien, Gewebe, Gewirke, Gestricke und insbesondere Vliesstoffe. Die Flächengebilde sind vorzugsweise aus Fasermaterialien aufgebaut.

Als Materialien für die Herstellung dieser Flächengebilde sind alle in diese Form verarbeitbaren und schwer- oder nicht brennbaren Stoffe geeignet. Beispiele für solche Materialien sind Metalle, insbesondere Aluminium, oder faserbildende organische oder anorganische Materialien, wie Fasern aus aromatischen Polyamiden, aus Kohlenstoff oder insbesondere aus Glas.

Soll das Flächengebilde als Verstärkungsmaterial dienen, so wird dieses so ausgewählt, daß es eine im Vergleich zum eingesetzten Vliesstoff größere Formstabilität besitzt.

Die Herstellung der erfindungsgemäßen Schichtstoffe erfolgt üblicherweise durch getrennte Herstellung der einzelnen Schichten, nachfolgende Kombination dieser Schichten und anschließendes Verkleben der Schichten durch Erhitzen, gegebenenfalls unter Anwendung von Druck, so daß die Bindefasern auf der Oberfläche des Vliesstoffes praktisch vollständig aufschmelzen und mit der anliegenden Oberfläche des Flächengebildes eine Verbindung eingehen. Das Herstellungsverfahren wird anhand von Schichtstoffen enthaltend Spinnvliese beschrieben. Es ist in analoger Weise auch zur Herstellung von Schichtstoffen auf der Basis anderer Vliesstoffe durchführbar, indem man das Spinnvlies durch z.B. Kardenvliese ersetzt.

Die Erfindung betrifft auch die Herstellung der erfindungsgemäßen Schichtstoffe, wie in den Ansprüchen 12 bis 14 definiert.

Die erfindungsgemäßen Schichtstoffe lassen sich zur Herstellung von bituminierten Dach- und Dichtungsbahnen verwenden. Dies ist ebenfalls ein Gegenstand der vorliegenden Erfindung. Dazu wird das Trägermaterial in an sich bekannter Weise mit Bitumen behandelt und anschließend gegebenenfalls mit einem körnigen Material, beispielsweise mit Sand, bestreut. Die auf diese Weise hergestellten Dach- und Dichtungsbahnen zeichnen sich durch gute isotrope Festigkeitswerte und durch eine gute Flammfestigkeit aus.

Ein weiterer Gegenstand der Erfindung sind ausgewählte schmelzbinderverfestigte Vliesstoffe wie in den Ansprüchen 16 bis 19 definiert, die sich zur Herstellung der erfindungsgemäßen Schichtstoffe einsetzen lassen. Diese Vliesstoffe sind durch die Anwesenheit von mindestens drei einander abwechselnden Schichten gekennzeichnet, in denen hauptsächlich besagte Trägerfasern oder hauptsächlich besagte Bindefasern auftreten, und wobei zumindest eine Oberfläche der Vliesstoffe durch eine hauptsächlich Bindefasern enthaftende Schicht gebildet wird, die teilweise aufgeschmolzen ist.

Die Herstellung der erfindungsgemäßen Schichtstoffe wird beispielhaft durch die Figur erläutert.

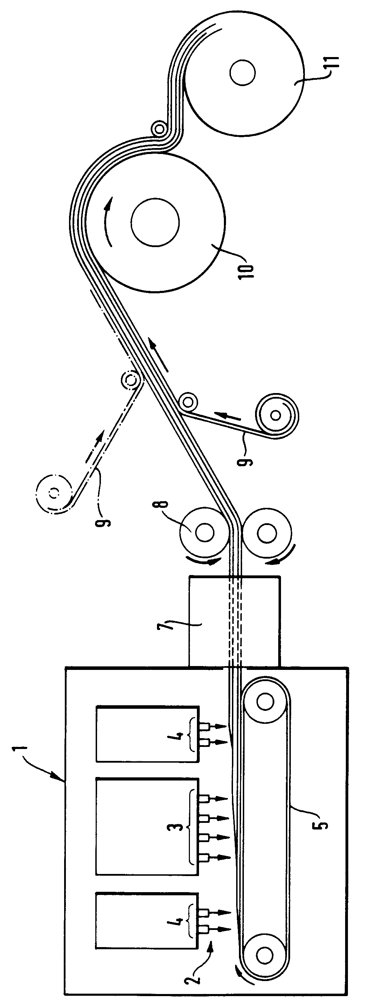

In einer an sich üblichen Vliesbildungseinrichtung (1) wird ein erfindungsgemäßes Spinnvlies hergestellt. Dies erfolgt gemäß der Figur durch Verspinnen von geschmolzenen Polymeren aus mehreren in hintereinander geschalteten Reihen von Spinndüsen (2). Dabei werden die einzelnen Reihen von Spinndüsen bzw. Gruppen (3, 4) von Spinndüsenreihen abwechselnd mit Polymeren beschickt, die die Trägerfaser und die Bindefasern bilden. Die ausgesponnenen Polymerströme werden in an sich bekannter Weise verstreckt, und z.B. unter Verwendung einer rotierenden Prallplatte in Streutextur auf einem Transportband (5) abgelegt. Durch diese Anordnung der Spinndüsen wird ein primäres Spinnvlies mit unterschiedlichen Schichten erzeugt, in denen entweder die Bindefasern oder die Trägerfasern den Hauptanteil bilden. Gemäß Figur 1 werden die in Vliesbildungsrichtung ersten und die letzten Reihen der Spinndüsenanordnung mit Binderpolymer beschickt, so daß das entstehende Primärvlies sowohl an seiner Ober- als auch an seiner Unterseite hauptsächlich Bindefasern aufweist.

Das auf diese Weise erzeugte Primärvlies wird anschließend in an sich bekannter Weise thermisch vorverfestigt, indem es z.B. in einer Vorverfestigungseinrichtung (7) mit einer heißen Walze behandelt wird, so daß zumindest ein Teil der Bindefasern aufschmilzt, wodurch sich das Primärvlies soweit verfestigt, daß es ohne das Transportband gehandhabt werden kann. Diese Art der Vorverfestigung ist z.B. in der DE-PS 3,322,936 beschrieben. Anschließend wird das vorverfestigte Vlies in einer Zwischenverfestigungseinrichtung (8) behandelt, worin durch Anwendung von erhöhter Temperatur und gegebenenfalls von Druck die Bindefasern soweit aufgeschmolzen werden, daß sie größtenteils ihre durchgehende Faserstruktur verlieren. Dieser Schritt wird vorzugsweise durch Kalandrieren des vorverfestigten Primärvlieses durchgeführt.

Anschließend wird das Flächengebilde (9) zugeführt, beispielsweise ein Vliesstoff aus Glasfasern, und mit der Seite des endverfestigten Spinnvlieses in Berührung gebracht, auf deren Oberfläche sich eine Schicht des an- oder aufgeschmolzenen Binderpolymeren befindet. Die Zuführung des Flächengebildes (9) kann ein- oder beidseitig erfolgen.

Danach wird die Kombination aus Spinnvlies und Flächengebilde durch Anwendung von erhöhter Temperatur und gegebenenfalls Druck miteinander verklebt. Dies kann z.B. in einem Heißluftofen oder vorzugsweise auf einem Siebtrommelfixierer (10) geschehen, in dem die Temperatur so hoch gewählt wird, daß der Schmelzpunkt des Bindepolymeren überschritten wird, so daß dieses eine Klebeschicht zwischen dem Spinnvlies und dem Flächengebilde ausbildet. Anschließend wird der fertige Schichtstoff in an sich bekannter Weise aufgewickelt (11).

Das vorstehend beschriebene Verfahren kann auf viele Arten variiert werden, ohne daß der Grundgedanke der vorliegenden Erfindung dabei verlassen wird. So lassen sich beispielsweise verschiedene Abfolgen von Träger- und Binderpolymeren vorgeben und dadurch unterschiedlich geschichtete Spinnvliese herstellen. Auch läßt sich anstelle des Flächengebildes (9) ein Schichtstoff aus Vliesstoff und einseitig aufgebrachten Flächengebilde vorlegen, so daß eine Sandwichstruktur entsteht. Es ist auch ohne weiteres möglich, mehr als zwei Typen von Polymeren bei der Herstellung des Vliesstoffes einzusetzen oder die Bindefasern in Form von Bi- oder Mehrkomponenten-Fasern einzusetzen. Ferner läßt sich das geschilderte Verfahren auch in getrennten Schritten durchführen, indem diese z.B. nach der Endverfestigung des Spinnvlieses unterbrochen wird und die Kombination mit dem Flächengebilde (9) und eine Verklebung der Schichten in einem getrennten Arbeitsgang durchgeführt wird.

## Patentansprüche

1. Schichtstoff enthaltend mindestens einen schmelzbinderverfestigten Vliesstoff auf Basis von Trägerfasern und Bindefasern und ein damit verbundenenes Flächengebilde, welches vermittels einer Klebschicht mit dem Vliesstoff verbunden ist, dadurch gekennzeichnet, daß besagte Klebschicht durch praktisch vollständiges Aufschmelzen von Bindefasern erhältlich ist, welche sich in Form einer Schicht zumindest auf der Oberfläche des Vliesstoffes, die dem Flächengebilde zugewandt ist, befinden.

2. Schichtstoff nach Anspruch 1, dadurch gekennzeichnet, daß das Flächengebilde eine Verstärkungsschicht ist, insbesondere eine Verstärkungsschicht auf Basis eines schwer oder nicht brennbaren Materials.

3. Schichtstoff nach Anspruch 1, dadurch gekennzeichnet, daß der Vliesstoff ein Spinnvlies ist.

4. Schichtstoff nach einem der Ansprüche 2 oder 3, dadurch gekennzeichnet, daß das die Verstärkungsschicht bildende Flächengebilde ein Gewebe, Gewirke, Gestrick oder insbesondere ein Vliesstoff ist.

5. Schichtstoff nach einem der Ansprüche 2, 3 oder 4, dadurch gekennzeichnet, daß das schwer oder nicht brennbare Material ein Metall, insbesondere Aluminium, oder ein faserbildendes organisches oder anorganisches Material ist.

6. Schichtstoff nach Anspruch 5, dadurch gekennzeichnet, daß das schwer oder nicht brennbare Material in Faserform vorliegt und ein hochmoduliges Fasermaterial ist, insbesondere ein Fasermaterial enthaltend aromatische Polyamide, Kohlenstoff oder Glas.

7. Schichtstoff nach Anspruch 6, dadurch gekennzeichnet, daß es sich bei dem schwer oder nicht brennbaren Material um Glasfasern handelt.

8. Schichtstoff in Sandwichform nach einem der Ansprüche 1 bis 7, dadurch gekennzeichnet, daß das Flächengebilde sich zwischen zwei schmelzbinderverfestigten Vliesstoffen befindet und sich jeweils zwischen dem Flächengebilde und einem Vliesstoff eine Klebschicht gemäß Anspruch 1 befindet.

9. Schichtstoff in Sandwichform nach einem der Ansprüche 1 bis 7, dadurch gekennzeichnet, daß die Schicht aus schmelzbinderverfestigtem Vliesstoff sich zwischen zwei Flächengebilden befindet und sich jeweils zwischen einem Flächengebilde und dem Vliesstoff eine Klebschicht gemäß Anspruch 1 befindet.

10. Schichtstoff nach einem der Ansprüche 1 bis 9, dadurch gekennzeichnet, daß die Trägerfasern des schmelzbinderverfestigten Vliesstoffes aus Polyester, insbesondere aus Polyethylenterephthalat bestehen.

11. Schichtstoff nach einem der Ansprüche 1 bis 10, dadurch gekennzeichnet, daß die Bindefasern des schmelzbinderverfestigten Spinnvlieses aus Bikomponenten-Fasern des Seite-an-Seite Typs oder insbesondere des Kern-Mantel Typs bestehen, wobei die höherschmelzende Komponente aus Polyester, insbesondere aus Polyethylenterephthalat besteht, und die niedrigerschmelzende Klebekomponente aus niedriger schmelzendem Polyester oder aus Polyolefinen, insbesondere aus niedrigerschmelzendem modifiziertem Polyethylenterephthalat oder aus Polybutylenterephthalat besteht.

12. Verfahren zur Herstellung des Schichtstoffes nach Anspruch 3, umfassend die Schritte:
i) Herstellung eines Spinnvlieses durch Ausspinnen von geschmolzenem Polymermaterial aus parallel zueinander angeordneten Reihen von Spinndüsen unter Ausbildung von Trägerfasern und Bindefasern wobei zumindest die erste und/oder die letzte Reihe der Spinndüsen mit zur Herstellung von Bindefasern geeignetem Polymermaterial beschickt wird,
ii) Verstrecken und Ablegen der so erhaltenen Polymerströme in an sich bekannter Weise auf einem Transportband, so daß sich zumindest auf der Oberseite oder auf der Unterseite des entstehenden Primärvlieses eine hauptsächlich aus Bindefasern bestehende Schicht ausbildet
iii) mechanische Stabilisierung des sich auf dem Transportband befindlichen Primärvlieses durch Anwendung von Druck und/oder von erhöhter Temperatur auf besagtes Primärvlies, so daß dieses in der folgenden Stufe ohne Beschädigung gehandhabt werden kann,
iv) Zwischenverfestigung des stabilisierten Primärvlieses durch Kalandrieren und Aufschmelzen eines Teils der Bindefasern,
v) Zuführen eines Flächengebildes, insbesondere eines Flächengebildesauf Basis eines schwer oder nicht brennbaren Materials, so daß besagtes Flächengebilde mit besagtem zwischenverfestigtem Spinnvlies so kombiniert wird, daß die hauptsächlich aus Bindefasern gebildete Oberfläche des Spinnvlieses mit dem Flächengebilde in Berührung kommt, und
vi) Ausüben von erhöhter Temperatur und gegebenenfalls erhöhtem Druck, so daß die Bindefasern zumindest an der Berührungsfläche zwischen Spinnvlies und Flächengebilde praktisch vollständig aufschmelzen, sich eine Klebschicht zwischen beiden Flächengebilden ausbildet und der Schichtstoff seine Endverfestigung erfährt.

13. Verfahren zur Herstellung eines Schichtstoffes in Sandwichform auf Basis eines Spinnvlieses nach Anspruch 8, umfassend die Schritte i) bis vi) nach Anspruch 12, dadurch gekennzeichnet, daß das in Schritt v) zugeführte Flächengebilde seinerseits ein Schichtstoff ist, der ein Spinnvlies und ein damit gemäß Anspruch 1 verklebtes Flächengebilde enthält, wobei dieser Schichtstoff mit dem damit zu verbindenden Spinnvlies so in Berührung gebracht wird, daß die Schicht aus dem Flächengebilde mit der hauptsächlich aus Bindefasern gebildeten Oberfläche des Spinnvlieses in Berührung kommt.

14. Verfahren zur Herstellung des Schichtstoffes in Sandwichform auf Basis eines Spinnvlieses nach Anspruch 9, umfassend die Schritte i) bis vi) nach Anspruch 12, dadurch gekennzeichnet, daß das in Schritt ii) hergestellte Spinnvlies auf seiner Oberseite und auf seiner Unterseite jeweils eine hauptsächlich aus Bindefasern bestehende Schicht aufweist und daß in Schritt v) gleichzeitig oder aufeinander folgend auf die Oberseite und auf die Unterseite besagten Spinnvlieses jeweils ein Flächengebilde gemäß Anspruch 1 zugeführt wird.

15. Verwendung des Schichtstoffes gemäß einem der Ansprüche 1 bis 11 zur Herstellung von bituminerten Dach- und Dichtungsbahnen.

16. Schmelzbinderverfestigter Vliesstoff auf der Basis von Trägerfasern und Bindefasern, wobei der Vliesstoff einander abwechselnde Schichten aufweist in denen hauptsächlich besagte Trägerfasern oder hauptsächlich besagte Bindefasern auftreten, dadurch gekennzeichnet, daß der Vliesstoff mindestens drei dieser Schichten aufweist und daß zumindest eine Oberfläche des Vliesstoffes durch eine hauptsächlich Bindefasern enthaltende Schicht gebildet wird, die teilweise aufgeschmolzen ist.

17. Schmelzbinderverfestigter Vliesstoff nach Anspruch 16, dadurch gekennzeichnet, daß dieser aus drei Schichten besteht, von denen die beiden äußeren Schichten hauptsächlich aus Klebefasern gebildet sind und die Zwischenschicht hauptsächlich von Trägerfasern gebildet wird.

18. Schmelzbinderverfestigter Vliesstoff nach Anspruch 16, dadurch gekennzeichnet, daß dieser aus fünf bis sieben besagter einander abwechselnder Schichten besteht, wobei eine oder beide Oberflächenschichten aus einer hauptsächlich aus Bindefasern enthaltenden Schicht gebildet wird.

19. Schmelzbinderverfestigter Vliesstoff nach einem der Ansprüche 16 bis 18, dadurch gekennzeichnet, daß die Trägerfasern aus Polyethylenterepthalat bestehen, das insbesondere flammfest ausgerüstet ist, und daß die Bindefasern aus einem niedriger schmelzenden modifiziertem Polyethylenterepthalat oder aus Polybutylenterepthalat bestehen.
